# EUROPEAN PATENT APPLICATION

(11) **EP 3 219 463 A1**
(43) Date of publication of application: **20.09.2017**
(21) Application number: 17161082.7
(22) Date of filing: 15.03.2017
(51) Int. Cl.: B29C 65/04, B64D 15/16

(54) **HIGH-ENERGY DIE-BASED WELDING PROCESSES FOR AIRFOIL DE-ICERS**

(30) Priority: 17.03.2016 US 201662309516 P
(71) Applicant: Goodrich Corporation, Charlotte, NC 28217-4578 (US)
(72) Inventor: SCHOMER, Samual Steven Riczo, Akron, OH 44308 (US); FAHRNER, Alan J., Canton, OH 44708 (US); TAUSCHER, Kurt M., Kent, OH 44240 (US); TAYLOR, Andrew, Hudson, OH 44236 (US); HUNTER, James R., Union, WV 24983 (US); BRITTINGHAM, David L., Canton, OH 44718 (US)
(74) Representative: Bridge, Kerry Ann

(57) **Abstract**

A method of manufacturing a de-icer assembly includes positioning a first welded-material layer and a second welded-material layer between a die and a die base of a die-based welding system, wherein at least one of the die and the die base includes a welded-portion pattern configured to weld the first welded-material layer to the second welded-material layer in the pattern such that inflatable portions are formed within the welded-portion pattern formed in the de-icer assembly between non-welded sections of the first welded-material layer and the second welded-material layer, pressing the first welded-material layer and the second welded-material layer together between the die and die base, and applying high energy to the die-based welding system using a high energy source such that the first welded-material layer and the second welded-material layer are welded together at the areas in the shape of the welded-portion pattern to form a welded de-icer assembly.

## Description

### CROSS-REFERENCE TO RELATED APPLICATIONS

The present application claims priority from U.S. Provisional Patent Application No. 62/309,516, filed March 17, 2016. The contents of the priority application are hereby incorporated by reference in their entirety.

### BACKGROUND

The subject matter disclosed herein generally relates to pneumatic de-icing systems and, more particularly, to dies for welding processes for manufacturing pneumatic de-icing systems.

During flight, an aircraft may be subject to conditions wherein ice accumulates on component surfaces of the aircraft such as wings, struts, airfoils, etc. If unchecked, such accumulations can laden the aircraft with additional weight and may alter airfoil configurations of the wings and/or control surfaces of the aircraft in a detrimental fashion. Efforts to prevent and/or remove such accumulations of ice under flying conditions has resulted in three generally universal approaches to removal of accumulated ice, a process known generally as de-icing.

One process is thermal de-icing, wherein portions of an airfoil, such as a leading edge, are heated to loosen adhesive forces between accumulating ice and the aircraft component. Once loosened by thermal conditions, the ice can be blown from the aircraft component by the airstream passing over the aircraft. Another process for de-icing involves chemicals. A chemical can be applied or supplied to all or part of an aircraft to depress adhesion forces associated with ice accumulation upon the aircraft or to depress the freezing point of water collecting upon surfaces of the aircraft. The third method is termed mechanical de-icing. Mechanical de-icing may employ various mechanisms such as electromechanical hammering, overlapping flexible ribbon conductors employing an electrorepulsive force between conductors, and pneumatic de-icing. In pneumatic de-icing an airfoil is covered with a plurality of expandable, generally tubelike structures, inflatable by employing a pressurized fluid, typically air, with the de-icer being formed from compounds having elastomeric or substantially elastic properties. Improvements in pneumatic de-icing mechanisms may be advantageous.

### SUMMARY

According to one embodiment, a method of manufacturing a de-icer assembly is provided. The method includes positioning a first welded-material layer and a second welded-material layer between a die and a die base of a die-based welding system, wherein at least one of the die and the die base includes a welded-portion pattern thereon configured to weld the first welded-material layer to the second welded-material layer in the pattern of the welded-portion pattern such that inflatable portions are formed within the welded-portion pattern formed in the de-icer assembly between non-welded sections of the first welded-material layer and the second welded-material layer, pressing the first welded-material layer and the second welded-material layer together between the die and the die base, and applying high energy to the die-based welding system using a high energy source such that the first welded-material layer and the second welded-material layer are welded together at the areas in the shape of the welded-portion pattern to form a welded de-icer assembly.

In addition to one or more of the features described herein, or as an alternative, further embodiments of the method may include that the high energy source is radio frequency energy.

In addition to one or more of the features described herein, or as an alternative, further embodiments of the method may include that the die-based welding system includes an upper platen supporting the die and a lower platen supporting the die base, the upper and lower platens configured to press the die and die base together.

In addition to one or more of the features described herein, or as an alternative, further embodiments of the method may include that the die-based welding system includes a press supporting the die and a press base supporting the die base, wherein the press and the press base are configured to compress the first welded-material layer and the second welded-material layer between the die and the die base.

In addition to one or more of the features described herein, or as an alternative, further embodiments of the method may include positioning a buffer layer between the die base and the second welded-material layer.

In addition to one or more of the features described herein, or as an alternative, further embodiments of the method may include that the welded-portion pattern defines a pattern of welded portions and inflatable portions that are formed in the de-icer assembly extending in a chordwise direction.

In addition to one or more of the features described herein, or as an alternative, further embodiments of the method may include that the welded-portion pattern defines a pattern of welded portions and inflatable portions that are formed in the de-icer assembly extending in a spanwise direction.

In addition to one or more of the features described herein, or as an alternative, further embodiments of the method may include that the welded-portion pattern defines a pattern of welded portions and inflatable portions that are formed in the de-icer assembly extending in an alternating chordwise direction pattern, wherein a first set of inflatable portions is fluidly isolated from a second set of inflatable portions.

In addition to one or more of the features described herein, or as an alternative, further embodiments of the method may include that the welded-portion pattern defines a pattern of welded portions and inflatable portions that are formed in the de-icer assembly extending in an alternating spanwise direction pattern, wherein a first set of inflatable portions is fluidly isolated from a second set of inflatable portions.

In addition to one or more of the features described herein, or as an alternative, further embodiments of the method may include that the welded-portion pattern defines a pattern of welded portions and inflatable portions that are formed in the de-icer assembly in a non-uniform pattern.

In addition to one or more of the features described herein, or as an alternative, further embodiments of the method may include that the welded-portion pattern defines a pattern of welded portions and inflatable portions including reinforced corners.

In addition to one or more of the features described herein, or as an alternative, further embodiments of the method may include that the welded-portion pattern defines a pattern of welded portions and inflatable portions including welded portions having non-uniform dimensions.

In addition to one or more of the features described herein, or as an alternative, further embodiments of the method may include that the welded-portion pattern includes a geometric edge pattern.

In addition to one or more of the features described herein, or as an alternative, further embodiments of the method may include that the welded-portion pattern defines a pattern of welded portions and inflatable portions including welded portions having bleed apertures formed within the welded portions such that adjacent inflatable portions are fluidly connected.

In addition to one or more of the features described herein, or as an alternative, further embodiments of the method may include that the first welded-material layer includes a first exterior layer that is opposite a side of the first welded-material layer that welds to the second welded-material layer.

In addition to one or more of the features described herein, or as an alternative, further embodiments of the method may include that the first exterior layer is an elastomeric layer.

In addition to one or more of the features described herein, or as an alternative, further embodiments of the method may include that the second welded-material layer includes at least one second exterior layer that is opposite a side of the second welded-material layer that welds to the first welded-material layer.

In addition to one or more of the features described herein, or as an alternative, further embodiments of the method may include that the at least one second exterior layer is an elastomeric layer.

In addition to one or more of the features described herein, or as an alternative, further embodiments of the method may include that at least one of the first welded-material layer and the second welded-material layer includes a filler material selected to bond the first welded-material layer to the second welded-material layer when the high energy is applied by the high energy source.

In addition to one or more of the features described herein, or as an alternative, further embodiments of the method may include that the welded-material layers are formed from at least one of neoprene, natural rubber, polychloroprene, thermoplastics, thermosetting elastomers, polyurethane, thermoplastic polyurethane, or silver urethane.

Technical effects of embodiments of the present disclosure include dies and die patterns for welding layers of de-icer assemblies. Additional technical effects include sealed or airtight bonds between layers of a de-icer assembly such that only intentional and/or controlled bleed between inflatable portions of the de-icer assembly are present. Further technical effects include radio frequency welding using a die having a die pattern that provides for unique and/or optimized inflatable portions in a de-icer assembly.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is an isometric schematic illustration of a de-icer assembly on an airfoil;
FIG. 1B is a plan schematic illustration of the de-icer assembly of FIG. 1A;
FIG. 1C is a cross-sectional schematic illustration of the de-icer assembly of FIG. 1A as indicated by the line C-C in FIG. 1B;
FIG. 2A is a schematic illustration of a de-icer assembly in accordance with an embodiment of the present disclosure, shown in a first state;
FIG. 2B is an enlarged schematic illustration of the de-icer assembly of FIG. 2A;
FIG. 2C is a schematic illustration of the de-icer assembly shown in FIG. 2A in a second state;
FIG. 3 is a schematic illustration of a die-based welding system in accordance with an embodiment of the present disclosure;
FIG. 4 is a schematic illustration of a horn-based welding system in accordance with an embodiment of the present disclosure;
FIG. 5A is a plan schematic illustration of a de-icer assembly in accordance with an embodiment of the present disclosure;
FIG. 5B is a plan schematic illustration of a de-icer assembly in accordance with another embodiment of the present disclosure;
FIG. 5C is a plan schematic illustration of a de-icer assembly in accordance with another embodiment of the present disclosure;
FIG. 5D is a plan schematic illustration of a de-icer assembly in accordance with another embodiment of the present disclosure;
FIG. 5E is a plan schematic illustration of a de-icer assembly in accordance with another embodiment of the present disclosure;
FIG. 5F is a plan schematic illustration of a de-icer assembly in accordance with another embodiment of the present disclosure;
FIG. 6 is a number of schematic illustrations of welded portion configurations in accordance with various embodiments of the present disclosure;
FIG. 7 is a schematic illustration comparing a circular welded portion of a de-icer assembly in accordance with an embodiment of the present disclosure with a circular sewn portion of a de-icer assembly;
FIG. 8 is a schematic illustration comparing a corner welded portion of a de-icer assembly in accordance with an embodiment of the present disclosure with a corner sewn portion of a de-icer assembly;
FIG. 9 is a schematic illustration comparing an edge welded portion of a de-icer assembly in accordance with an embodiment of the present disclosure with an edge sewn portion of a de-icer assembly;
FIG. 10A is a schematic illustration of a de-icer assembly in accordance with an embodiment of the present disclosure;
FIG. 10B is a cross-sectional illustration of the de-icer assembly of FIG. 10A as indicated along the line B-B;
FIG. 11 is a flow process for manufacturing a de-icer assembly in accordance with an embodiment of the present disclosure; and
FIG. 12 is a flow process for manufacturing a de-icer assembly in accordance with another embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

As provided herein, welded carcass joints between nylon fabric or equivalent material for pneumatic de-icers are presented along with dies for enabling various configurations of such systems. Various embodiments provided herein employ radio frequency welding that utilizes a die and specific radio waves to bond two layers of material in the shape of the die. Alternatively, ultrasonic welding may be used. Embodiments provided herein enable improved de-icer configurations while having high fabric strength, desired fluid flow between adjacent tubes within the de-icer, automation of manufacturing, reduced material costs, reduced labor times, improved durability, improved de-icing operation, and other benefits as described herein and as will be appreciated by those of skill in the art.

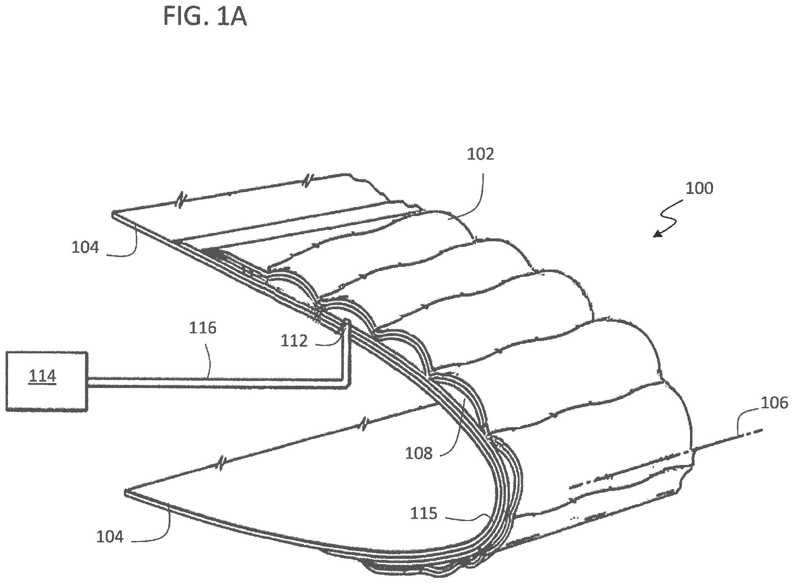

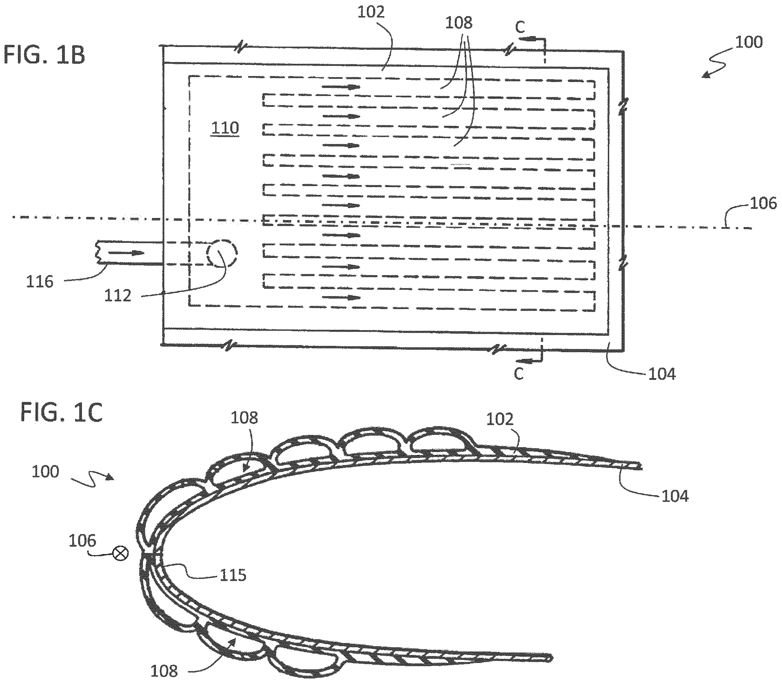

Referring now to FIGS. 1A-1C, various schematic illustrations of a pneumatic de-icing system are shown. FIG. 1A is an isometric schematic illustration of a pneumatic de-icing system 100 having a de-icer assembly 102 attached to an airfoil 104. FIG. 1B is a plan view schematic illustration of the pneumatic de-icing system 100. FIG. 1C is a cross-section schematic illustration of the pneumatic de-icing system 100 along the line C-C, as indicated in FIG. 1B.

The de-icer assembly 102 is formed from a composite having elastomeric or substantially elastic properties. The de-icer assembly 102 is disposed on the airfoil 104 across a leading edge axis 106. "Leading edge" as used herein means those edges of an aircraft component on which ice accretes and is impinged upon by air flowing over the aircraft and having a point or line at which the airflow stagnates. A plurality of tubes 108 are formed in the composite and are provided pressurized fluid, such as air, from a manifold 110. The manifold 110 is supplied fluid via a connector 112. Fluid from a pressurized fluid source 114 is supplied along a flow path 116, through the connector 112, and into the manifold 110. In some, the connector 112 is integrated into the de-icer assembly 102 during manufacturing. The tubes 108 are configured to expand or stretch under pressure during inflation cycles, thereby causing a substantial change in the profile of the de-icer assembly 102 (as well as the leading edge 115 of the airfoil 104) to cause cracking of ice accumulating thereon. For example, during expansion the tubes 108 can be configured (e.g., based on the size of the tubes 108 and/or the various material(s) of the de-icer assembly 102) by 40% or more to thus inflate and dislodge or break apart any ice that may have formed on and exterior surface of the de-icer assembly 102.

FIG. 1C shows a cross sectional view of the pneumatic de-icer system 100 along the line C-C shown in FIG. 1B. The de-icer assembly 102 is disposed on the airfoil 104 across a leading edge axis 106 of the airfoil 104. Upon inflation, the tubes 108 of the de-icer assembly 102 expand substantially. The tubes 108 are represented with, but not limited to, paths along or parallel to the leading edge axis 106 of the airfoil 104 and this expansion cracks ice accumulating thereon for dispersal into the airstream passing over the airfoil 104. For example, FIG. 1C shows the tubes 108 in an inflated state. In the embodiments of FIGS. 1A-1C, the principal ice cracking, bending, and shearing stresses are exerted primarily in geometrical planes normal to the axis of the inflated tube radius. Those of skill in the art will appreciate that other configurations are possible, including but not limited to de-icers that expand perpendicular or at angles to the leading edge. In geometrical planes containing the axis of the inflated tube radius, however, little or no principal ice cracking stresses are produced. Efforts to improve such pneumatic de-icing systems have been limited by geometry of current manufacturing methods.

Current production methods for manufacturing pneumatic de-icers utilize either tube-type construction or sewn carcasses (i.e., the structure of the pneumatic de-icer that inflates). In tube-type de-icers, premade tubing is laid in patterns to create de-icers with the ability to separate areas for the purpose of alternate inflation (e.g., subsets of the tubes 108 can be inflated simultaneously or separately). However, tube-type construction can be time consuming and cured tube seams can be subject to fatigue failure. Additionally, the end of each inflatable tube area must be manually sealed. Further, at the manifold, special tubes and joining procedures are required in order to properly distribute air.

Sewn carcasses utilize computerized or manually-operated sewing machines to create similar patterns in sheets of rubber-coated nylon fabric. Due to functional limitations of computerized sewing machines, certain orientations and/or stitching directions are not possible. Further, sewn-type de-icers using manual single-needle machines require significant skill even on rudimentary parts to ensure tolerances are met for operation on airfoils of aircraft. Regardless of the sewn-type process (e.g., computerized or manual), the penetration of the carcass material during stitching (e.g., needle and thread piercing through the material) can have a minor but negative impact on the strength of the material. Inflation of the part causes stress concentrations at the base of each stitch and within the thread. If a stitch should fail, over time it could tear along the seam as the thread becomes loose.

Accordingly, alternative methods, processes, and associated devices and/or systems capable of producing unique geometries for the tubes or bladders of the de-icers and/or improved strength de-icers are provided herein. Various manufacturing processes provided herein include, but are not limited to, radio-frequency and ultrasonic welding of joints between nylon fabric equivalent materials. The radio-frequency welding may utilize die and specific radio waves to bond two layers of weld material in a specific pattern. Ultrasonic welding may utilize a converter-booster-anvil configuration to ultrasonically-weld weld materials. As used herein, the weld materials may be nylon fabrics, polymers, materials having fillers, or other materials, as known in the art. In some embodiments, elastomeric coatings may be applied to exterior surfaces of the weld materials, wherein an interior surface is a surface of contact between two layers of the weld material.

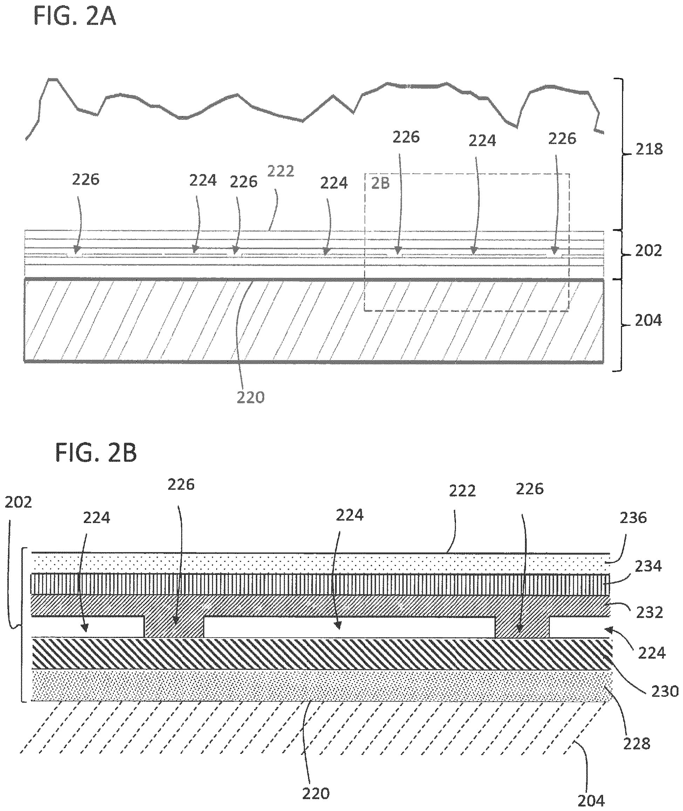

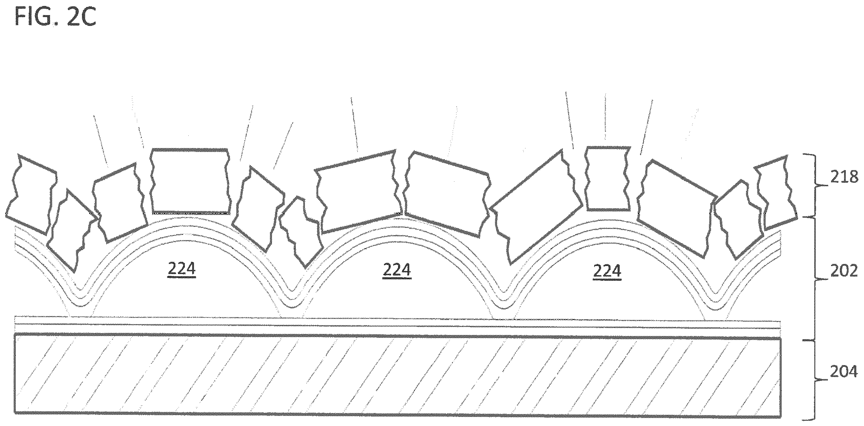

Turning now to FIGS. 2A-2C, various schematic illustrations of de-icer configurations in accordance with embodiments described herein are shown. FIG. 2A is a cross-sectional view of a de-icer assembly 202 configured on an airfoil 204 and having ice 218 accumulated thereon in a first state. FIG. 2B is an enlarged schematic illustration of the de-icer assembly 202 as indicated in FIG. 2A. FIG. 2C is a cross-sectional view of the de-icer assembly 202 of FIG. 2A in a second state (e.g., an inflated state).

As shown in FIG. 2A, the de-icer assembly 202 is formed of a plurality of layers. The de-icer assembly 202 is attached to the airfoil 204 on a bottom surface 220 and ice can form on a top surface 222 of the de-icer assembly 202. A plurality of inflatable portions 224 are formed within the de-icer assembly 202 between welded portions 226, which may be welded by various techniques. The inflatable portions 224 may be fluidly connected to each other or may be fluidly isolated from each other. Each inflatable portion 224 is fluidly connected to a fluid source (e.g., fluid source 114 shown in FIG. 1A) by a manifold, connector, or other fluid connection.

As shown in FIG. 2B, the de-icer assembly 202 is formed from a plurality of layers. For example, in the configuration of FIGS. 2A-2C, the de-icer assembly has, defining the bottom surface 220, a first exterior bond-side layer 228. As such, the first exterior bond-side layer 228 forms a first exterior surface of the de-icer assembly 202. In a non-limiting embodiment, the first exterior bond-side layer 228 is formed of an elastomeric material that either inherently can attach to a component surface (e.g., airfoil 204) or can be treated or have a substance or material applied thereto to attach to the component surface.

On top of the first exterior bond-side layer 228 is a first welded-material layer 230. The first welded-material layer 230 can be formed from a nylon fabric or other material, including, but not limited to, a material having a welding filler configured therein. And exterior surface (e.g., lower surface in FIG. 2B) of the first welded-material layer 230 can be configured to bond to the first exterior bond-side layer 228 and an interior surface (e.g., upper surface in FIG. 2B) of the first welded-material layer 230 can be configured to bond to a second welded-material layer 232, when a welding process is applied thereto. The second welded-material layer 232 may be formed of the same material as the first welded-material layer 230 or of a different material. However, the materials of the first welded-material layer 230 and the second welded-material layer 232 are configured to weld and/or bond when a welding process is applied thereto.

For example, a welding process, as described herein, may be selectively applied to various areas of the first welded-material layer 230 and the second welded-material layer 232. The welding process will form welded portions 226 and inflatable portions 224 between the first welded-material layer 230 and the second welded-material layer 232. The inflatable portions 224 may be air pockets or merely just portions of the first welded-material layer 230 and the second welded-material layer 232 that are not bonded or otherwise connected. The welded portions 226 are configured as fixed connections or bonds between the first welded-material layer 230 and the second welded-material layer 232 and may fluidly isolate volumes that are on opposing sides of the welded portions 226 (e.g., two adjacent inflatable portions 224 can selectively be fluidly isolated from each other).

A second exterior resilient layer 234 is configured on an exterior surface of the second welded-material layer 232. The second exterior resilient layer 234 may be configured substantially similar to the first exterior bond-side layer 228 or may be constructed of a different material. A breeze-side coating layer 236 is configured on an exterior surface of the second exterior resilient layer 234. The breeze-side coating layer 236 can be a layer formed of a material or texture that is configured to minimize ice accumulation on the de-icer assembly 202 and/or formed of a weather impervious material. As will be appreciated by those of skill in the art, various other layers and/or modifications thereof can be applied to construct a composite or layered de-icer assembly without departing from the scope of the present disclosure. Further, some of the described layers may be omitted, without departing from the scope of the present disclosure. For example, the exterior layers 228, 234 and/or the breeze-side coating layer 236 can be optional. In non-limiting examples, various of the layers can be formed from neoprene, natural rubber, polychloroprene, thermoplastics, thermosetting elastomers, polyurethane, thermoplastic polyurethane, silver urethane, and/or de-icer/de-icing materials and/or compounds.

For examples, various non-limiting embodiments, the exterior bond-side layer 228 can be formed from neoprene. In other embodiments, natural rubber can be used as an alternative. However, as will be appreciated by those of skill in the art, the material of the exterior bond-side layer 228 could be any material that is able to withstand curing processes, is sufficiently flexible to conform to a leading edge, and is capable of being bonded to an airfoil leading edge material. In some embodiments, the exterior resilient layer 234 can be formed from natural rubber compounds; however the material can be any elastic material that would help to return the de-icer to a flat deflated condition. The breeze-side coating layer 236 can be formed of neoprene (chloroprene), or urethane, however it may be any sufficiently elastic material so as not to significantly restrict the inflation of the de-icer. Further, in some embodiments, the coating layer 236 can have a low ice adhesion characteristic, such that ice will de-bond readily from the surface when the de-icer is inflated. The breeze-side coating layer 236 can also provide protection from the effects of weathering and protection from rain and sand erosion.

As will be appreciated by those of skill in the art, the de-icer assembly 202 is a composite. In one non-limiting example, the composite of the de-icer assembly 202 is comprised from bottom (the side of material bonded to the airfoil) to top of: a) a bottom layer or ply of flexible material, such as neoprene; b) a first intermediate, non-stretchable layer or ply (e.g., first welded-material layer 230) of nonstretchable fabric such as nonstretchable woven nylon fabric which may be natural rubber coated (e.g., first exterior bond-side layer 228) on one side; c) a second intermediate, layer or ply (e.g., second welded-material layer 232) of stretchable fabric, such as stretchable woven nylon fabric which may be rubber coated (e.g., second exterior resilient layer 234) on one side; and, e) a top layer or ply (e.g., breeze-side coating layer 236) of a tough yet pliable weather impervious material, such as neoprene, urethane, or similar suitable material.

Turning now to FIG. 2C, an alternative schematic illustration of the configuration shown in FIG. 2A is shown. As noted, FIG. 2A shows the de-icer assembly 202 in a first state. The first state is a non-inflated state, wherein no fluid is actively supplied into the inflatable portions 224. However, as shown in FIG. 2C, as fluid is supplied into the inflatable portions 224, the inflatable portions 224 will expand away from the airfoil 204 and thus break-up the ice 218 that has formed on the exterior or outer surface of the de-icer assembly 202. The fluid may be supplied in a similar fashion as that shown and described in FIGS. 1A-1C.

As noted, the de-icer assembly 202, or a portion thereof, may be formed through a welding process. As noted, radio frequency welding or ultrasonic welding may be used. Two dimensional patterns enabled through welding processes provided herein, rather than stitching or individually wrapped and laid tubes (previously used), can be used to directly address stress concentrations. Typical application of sewn-type or tube-type processes applies a hoop stress created by the inflation of the top layer of fabric. The hoop stress (force) is distributed throughout the stitches in a sewn-type de-icer, thus concentrating stresses between the threads and holes the threads pass through. By transitioning to a solid weld (as provided herein) and/or patterned joints, the stress concentration (force) can be alleviated. Further, bleed air between adjacent inflatable portions can be controlled through selective use of welded sections, rather than the general bleed that occurred through standard sewing. Further control is available in 3-dimensions if shaped dies are used.

Various welding techniques are described herein, although other types of welding may be used without departing from the scope of the present disclosure. For example, although described with respect to radio frequency welding and ultrasonic welding, these are merely examples of two different welding types that can be used to manufacture de-icer assemblies or portions thereof. The welding process is used to bond together materials in pneumatic de-icers to form unique inflatable portion patterns and/or inflation patterns that are not possible with mechanical sewn technology and/or tube-type technology.

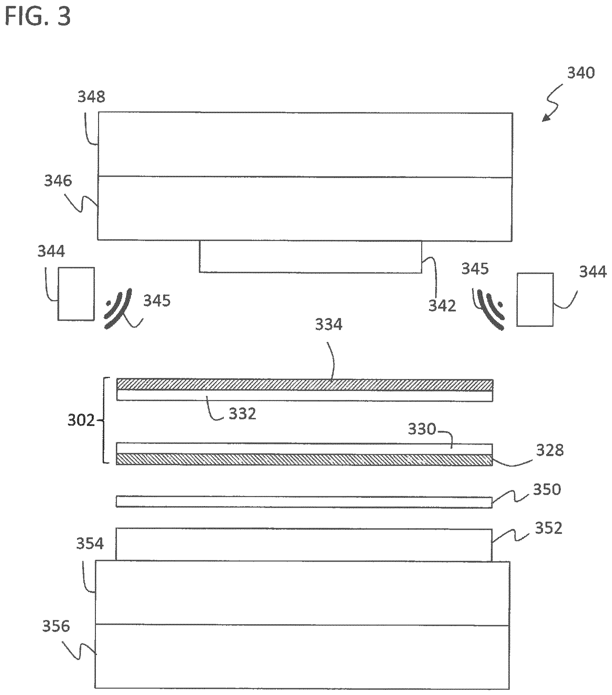

Turning now to FIG. 3, a schematic illustration of a radio frequency welding system 340 in accordance with an embodiment of the present disclosure is shown. The radio frequency welding system 340, as shown, is a die-based system wherein a die 342 having a predefined configuration is used to weld layers of a de-icer system 302 using one or more radio frequency sources 344.

As shown, the de-icer assembly 302 includes a first welded-material layer 330 and a second welded-material layer 332 that are configured to be welded or bonded together. Further, the first welded-material layer 330 has a first exterior layer 328, which may be configured similar to that described above, e.g., in some embodiments the first exterior layer 328 can be a rubber coating or layer on the first welded-material layer 330. Similarly, the second welded-material 332 has a second exterior layer 334, which may be configured similar to that described above, e.g., in some embodiments the second exterior layer 334 can be a rubber coating or layer on the second welded-material layer 332. The second welded-material layer 332, in some embodiments, can define inflatable portions (not shown) wherein the material thickness at the inflatable portions is less than the material thickness at welded portions. However, in other embodiments, the material thickness of the second welded-material layer 332 may be uniform and the second welded-material layer 332 can be bonded at only certain or predefined locations to the first welded-material layer 330 based on the configuration of the die 342.

The die 342 is retained on an upper platen 346. The upper platen 346 can be subject to pre-heat processes that are configured for the materials to be welded or bonded. The upper platen 346 is retained on or to a press 348 which is used to physically press the layers of the de-icer assembly 302 together during the welding process. Below the de-icer assembly 302 is an optional buffer layer 350 that is configured to prevent bonding of the layers of the de-icer assembly 302 with a die base 352. For example, the buffer layer 350 may be selected and/or configured such that the buffer layer 350 does not inhibit the ultimate bond strength of the composite material. The die base 352 is supported on a lower platen 354, which in turn is supported on a press base 356. The lower platen 354, in some embodiments, can be subject to a pre-heat process similar to the pre-heat process of the upper platen 346.

The die 342 and/or the die base 352 are configured with a pattern that is used to define welded portions of the de-icer assembly 302 (e.g., welded portions 226 shown in FIG. 2B). During manufacture, the die 342 and the die base 352 are compressed together with the layers of the de-icer assembly positioned therebetween. Radio frequency energy 345 is then applied to the radio frequency welding system 340 from the radio frequency sources 344. As noted above, other energy types can be used without departing from the scope of the present disclosure. For example, instead of radio frequency, the system may be configured with e-beam, high frequency welding, or other types of die-based welding as known in the art. The die pattern of the die 342 and/or the die base 352 may define an inflation pattern or patterns that will be formed in the de-icer assembly 302. The application of the high energy for the welding process may not impact the exterior layers 328, 334, and thus only the welded-material layers 330, 332 are bonded together to form an inflatable de-icer assembly.

Die-based welding and manufacturing may provide significant time efficiencies per unit time than either sewn-type or tube-type de-icer assemblies. Additionally, the nature of the product seams can allow for standardized tooling to be created. Moreover, fatigue life over other de-icer systems will be increased, in part because there is no puncturing of the de-icer assembly fabric which may decrease materials integrity. Production issues common to sewing, such as skipped stitches, may also be avoided. Moreover, alternating inflation sections, previously available in only tube-type designs, is possible in die-based welding of de-icer assemblies as the die-based system can offer selectively airtight or open seams. Accordingly, a single welding process is capable of producing all desired orientations currently produced on single needle machines, automated machines, and tube-type construction, in addition to enabling new and/or unique inflation portion orientations and/or designs.

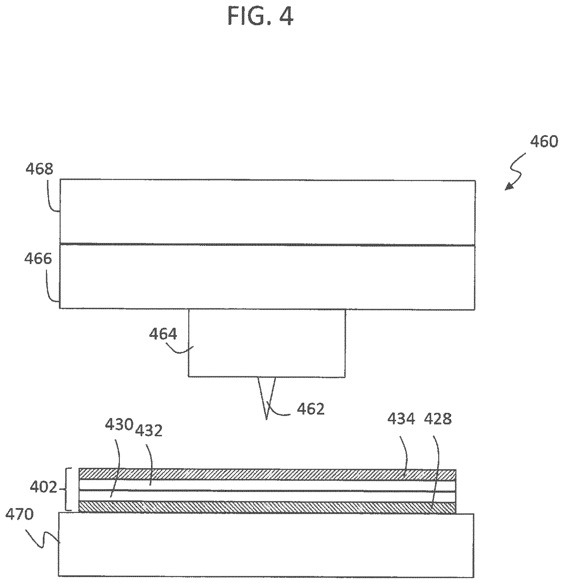

Turning now to FIG. 4, a schematic illustration of an ultrasonic welding system 460 in accordance with an embodiment of the present disclosure is shown. The ultrasonic welding system 460, as shown, is a horn-based system wherein an ultrasonic horn 462 is used to apply ultrasonic, high-frequency acoustic vibrations to weld layers of a de-icer system 402 together.

Similar to the configuration shown in FIG. 3, in FIG. 4, the de-icer assembly 402 includes a first welded-material layer 430 and a second welded-material layer 432 that are configured to be welded or bonded together. Further, the first welded-material layer 430 has a first exterior layer 428, which may be configured similar to that described above, e.g., in some embodiments the first exterior layer 428 can be a rubber coating or layer on the first welded-material layer 430. Similarly, the second welded-material 432 has a second exterior layer 434, which may be configured similar to that described above, e.g., in some embodiments the second exterior layer 434 can be a rubber coating or layer on the second welded-material layer 432. The second welded-material layer 432, in some embodiments, can define inflatable portions (not shown) wherein the material thickness at the inflatable portions is less than the material thickness at welded portions. However, in other embodiments, the material thickness of the second welded-material layer 432 may be uniform and the second welded-material layer 432 can be bonded at only certain or predefined locations to the first welded-material layer 430 based on the positioning and/or relative movement between the horn 462 and the de-icer assembly 402.

The horn 462 is retained on a booster 464. The booster 464 is retained on or to a converter 466 which is used to generate acoustic energy that is boosted by the booster 464 to welding energy levels. A press 468 can be used to actuate and/or move the horn 462 in two or three dimension relative to an anvil 470 that is below the de-icer assembly 402. That is, the press 468 can be configured to move the horn 462 in a vertical direction toward or away from the anvil 470 and the press 468, the anvil 470, and/or the de-icer assembly 402 can be moved laterally or horizontally such that the horn 462 contacts and welds the de-icer assembly 402 in predefined locations. In an alternative iteration, the press 468 and horn 462 may be stationary while the anvil 470 is the moving body to achieve similar functionality. In various embodiments the ultrasonic welding system 460 can be computer controlled or manually controlled or combinations thereof.

As noted above, the welding processes described herein and/or variations on and/or equivalents thereof can enable unique designs for welded portions and inflatable portions of de-icer assemblies. During a welding process the welded portions of the de-icer assembly are welded or bonded together, and the non-welded sections define the inflatable portions of the de-icer assembly. As described below, various non-limiting example configurations and designs of de-icer assemblies are shown. The configurations and designs can represent a finished de-icer assembly or, in die-based welding, can represent die forms and shapes.

Specific application features can be reflected by the dies or horn welding in areas of corners, variable weld widths, edges, intentional bleed features, that have been impossible patterns to be formed (e.g., by sewing or building of individual tubes). The ability to manufacture any two-dimensional pattern without compromising fabric integrity is a direct result of the processes described herein. Welding of de-icer assemblies allows for finer detail to be established than previous methods, and consequently embodiments provided herein can address some of the areas that are known to experience long term fatigue damage.

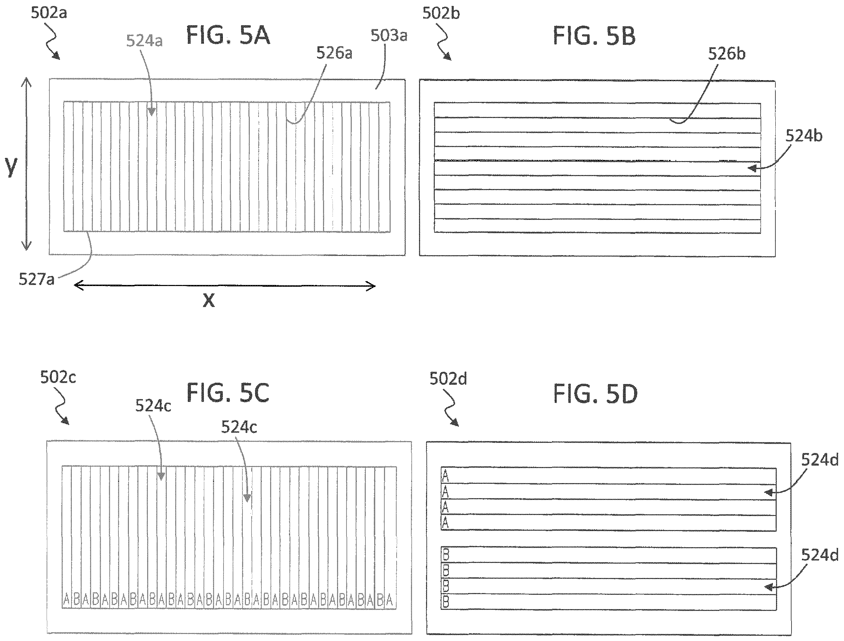

Turning now to FIGS. 5A-5F, various de-icer assembly or die designs and/or configurations are shown. In each of FIGS. 5A-5F, the x-direction is a spanwise direction and the y-direction is a chordwise direction. Each of the schematic illustrations in FIGS. 5A-9, in some embodiments of the present disclosure, represent welded-portion patterns that are configured with a die and/or die base, wherein the die pattern defines where layers of a de-icer assembly are bonded together during the welding process into the defined welded-portion pattern.

FIG. 5A shows a de-icer assembly (or related welded-portion pattern) 502a having a plurality of adjacent inflatable portions 524a that are fluidly connected to each other through specific features included in the welded portions 526a. As will be appreciated by those of skill in the art, fluidly connected these sections may be beneficial to the performance characteristics of the finished part. The inflatable portions 524a may be fluidly connected to one or more fluid sources (not shown). A non-inflatable zone 503a is formed around the inflatable portions 524a, with the inflatable portions 524a bound by a welded edge 527a. As shown in FIG. 5A, the inflatable portions 524a and the welded portions 526a are oriented in a chordwise direction y. FIG. 5B shows another configuration of a de-icer assembly 502b having spanwise oriented inflatable portions 524b and welded portions 526b. That is, the inflatable portions 524b and the welded portions 526b are oriented in a spanwise direction x.

Although shown with the inflatable portions each having substantially the same shape and size, those of skill in the art will appreciate that each inflatable portions 524a, 524b of FIGS. 5A-5B may be configured with any desired dimensions. For example, in FIG. 5A, some inflatable portions 524a can be configured with different spanwise widths as compared to other inflatable portions 524a of the same de-icer assembly 502a. Similarly, in FIG. 5B, some inflatable portions 524b can be configured with different chordwise widths as compared to other inflatable portions 524b.

Turning to FIGS. 5C and 5D, embodiments illustrating alternating inflation designs of inflatable portions on de-icer assemblies 502c, 502d are shown. FIG. 5C illustrates alternating "A" and "B" sets of inflatable portions 524c with the inflatable portions 524c oriented in the chordwise direction y. FIG. 5D illustrates "A" and "B" sets of inflatable portions 524d with the inflatable portions 524d oriented in the spanwise direction x. In the embodiments of FIGS. 5C-5D, the inflatable portions "A" can be independently inflated relative to the inflatable portions "B." Accordingly, in some embodiments, two different fluid sources and/or manifolds can be used to supply fluid to the inflatable portions 524c, 524d and/or a valve system may be configured to direct fluid to one or both of the "A" and "B" inflatable portions. Adjacent "A" and "B" inflatable portions, such as inflatable portions 524c are fluidly separate, while adjacent "A" and "A" or "B" and "B" sections may be fluidly connected. As will be appreciated by those of skill in the art, fluidly connecting these sections may be beneficial to the performance characteristics of the finished part.

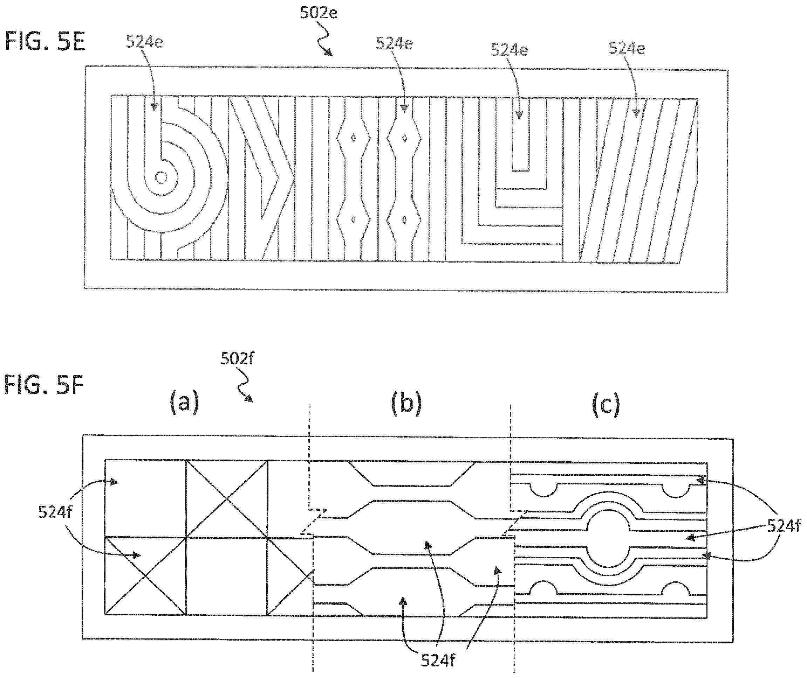

Turning now to FIGS. 5E-5F, various unique or non-uniform configurations of welded-portion patterns and/or patterns of the inflatable portions of de-icer assemblies in accordance with the present disclosure are shown. The de-icer assembly 502e of FIG. 5E includes a variety of geometries of inflatable portions 524e. The inflatable portions 524e can be configured to be inflatable all at the same time or may be configured into multiple different sets of inflatable portions that can be separately and/or independently inflated. Similarly, FIG. 5F shows additional variations, design patterns, and/or configurations of inflatable portions 524f of a die and/or de-icer assembly 502f. Again, the different sections or sets of inflatable portions 524f shown in FIG. 5F can be inflated all at once or may be configured into one or more sets or groups of inflatable portions 524f.

As will be appreciated by those of skill in the art, the designs and patterns of FIGS. 5A-5F can be combined and/or mix-and-matched to generate and form a de-icer assembly having any desired geometric configuration for the inflatable portions. Such unique geometries are enabled through die patterns that match the shown patterns and/or the use of a welding horn that can provide welded portions between adjacent inflatable portions.

In addition to providing custom inflatable portions having various geometries, dimensions, etc. welding processes, as provided herein, enable optimization and/or variable welded portions. That is, using a welding process, not only can the inflatable portions be configurable but the welded portions are also configurable.

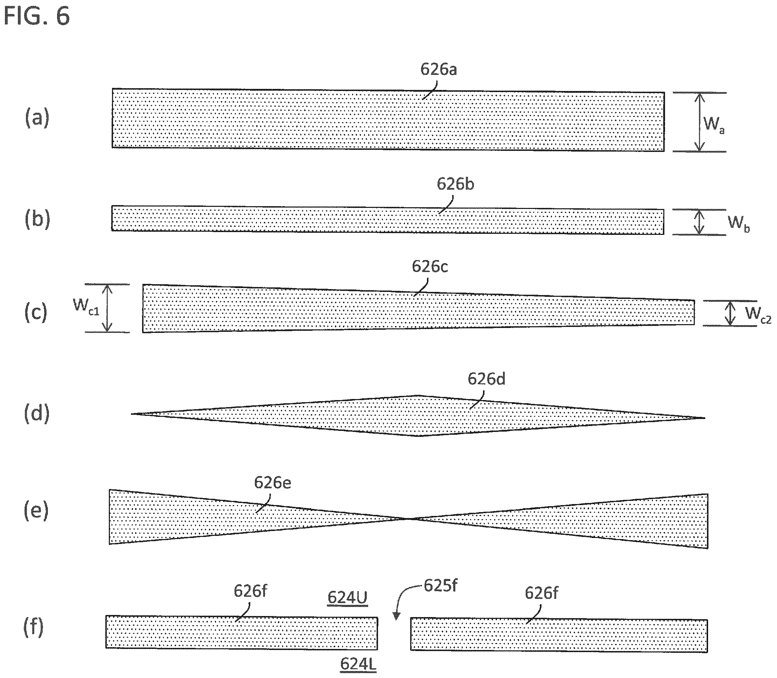

For example, FIG. 6 shows various non-limiting examples of welded portions that are enabled through the die-welding or horn-welding processes described herein. A first welded portion 626a is shown having a first width Wₐ, and a second welded portion 626b is shown having a second width W_{b}. The first width Wₐ of the first welded portion 626a can be larger than the second width W_{b} of the second welded portion 626b. As shown, the first and second welded portions 626a, 626b have constant widths Wₐ, W_{b}.

However, the welded portions as described herein can have variable width, as shown with respect to welded portions 626c, 626d, 626e. That is, welded portions in accordance with some embodiments of the present disclosure can have non-uniform dimensions. The welded portion 626c is tapered from one end to the other, having a first width W_{c1} at one end that is larger than a second width W_{c2} at a second end of the welded portion 626c. As shown, the welded portion 626d has a diamond shape, tapering from narrow ends toward a wider or thicker center. Oppositely, as shown, the welded portion 626e has wider or thicker ends and a narrower center or middle section.

Further, as shown with respect to the welded portion 626f, the welded portion 626f is not required to be continuous but can have a discontinuous or broken shape having a bleed aperture 625f formed therein. For example, fluid can flow from an upper inflatable portion 624U to a lower inflatable portion 624L through the bleed aperture 625f. Accordingly, intentional, desired, and/or controlled bleed between different inflatable portions can be achieved by forming the welded portions as desired and enabled herein. As will be appreciated by those of skill in the art, this geometry is not limited to the linear illustrations shown. For example, filleted or otherwise rounded geometry will be prevalent for reasons provided herein.

In additional to enabling unique geometries and/or configurations of welded portions and controlling bleed through welded portions (or between inflatable portions), additional features are enabled through welded de-icer assemblies as provided herein.

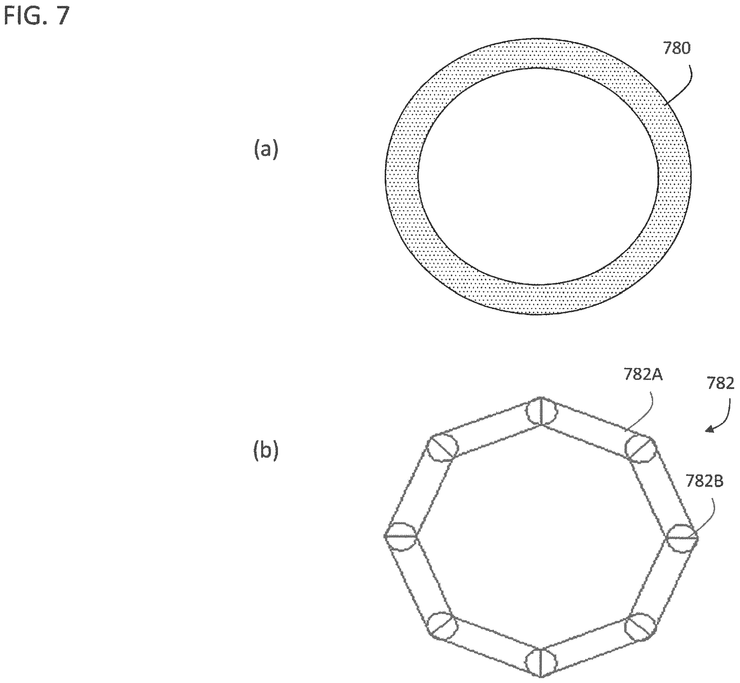

For example, turning to FIG. 7, circular features can be formed that are fluidly sealed. As shown in FIG. 7, a circular welded portion 780 is shown. The circular welded portion 780 can be formed by any types of welding as provided herein. As shown, the circular welded portion 780 forms a continuous structure. This is in contrast to a sewn-type circular structure, as shown as circular sewn portion 782. The circular sewn portion 782 is not continuous and does not form a sealed or fluidly isolated circular. In contrast, the circular sewn portion 782 is formed from a number of threads 782A that are threaded and have stitches 782B where curves are formed. The threads 782A and the stitches 782B can be stress points and further fluid may be able to pass through the threads 782A and/or the stitches 782B. Moreover, as is apparent from FIG. 7, the circular sewn portion 782 is not actually circular but rather is octagonal (although other polygons can be used, but may be limited by the mechanical limitations of sewing). Accordingly, welding, as provided herein, enables unique shapes that are structurally sound and also can be fluidly sealed.

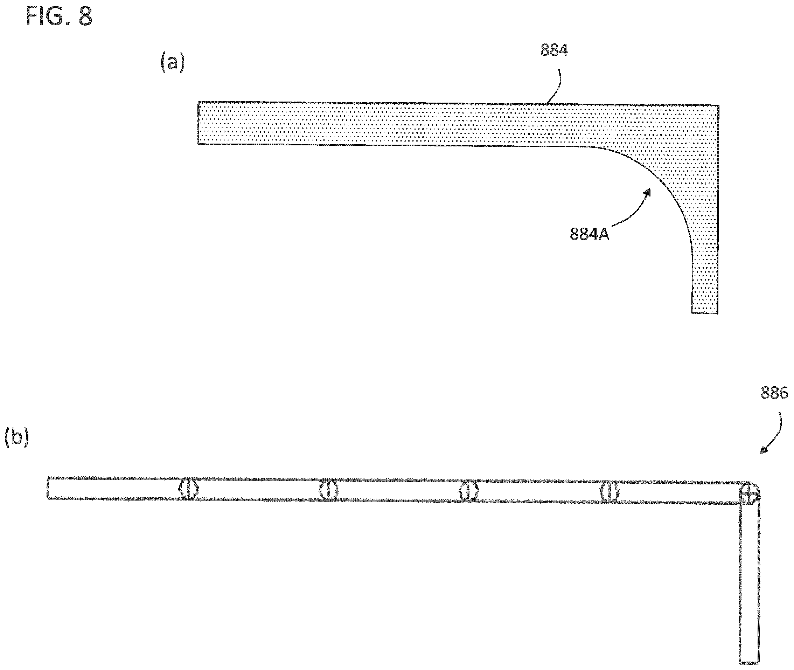

Additionally, welding of de-icer assemblies as provided herein may also allow for increased corners, edges, and/or other features. For example, with reference to FIG. 8, a welded corner portion 884 is shown. As shown, the welded corner portion 884 has a reinforced corner 884A. This is in contrast to a threaded corner 886, as shown in FIG. 8. The threaded corner 886 is right angle and is limited by the mechanical limitations of sewing. As will be appreciated by those of skill in the art, sharp corners such as those created by a sewing process provide a local increase in the stresses experienced by the local materials. Further, even if a non-right angle is formed, the limitations and drawbacks to threads and sewing still apply (e.g., non-sealed, increased stresses, etc.).

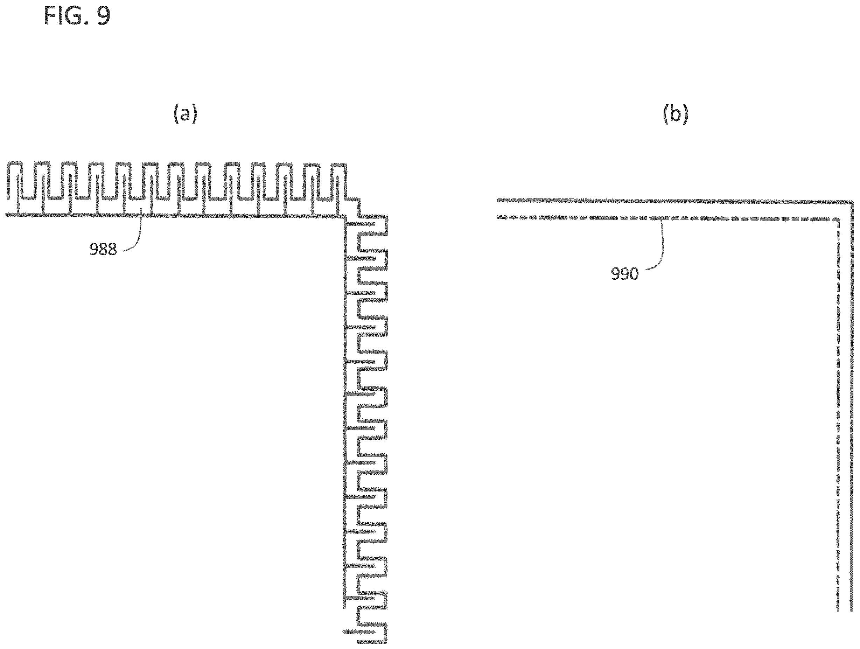

Further, unique edge patterns can be created using welding processes as described herein. That is, in some embodiments of the present disclosure, the de-icer assemblies and/or die welded-portion patterns can have geometric edge patterns that have not been previously achievable. For example, as shown in FIG. 9, a welded, reinforced, unique pattern carcass edge 988 can be generated. The welded carcass edge 988 can have improved strength and additional material and bonding where desired. In contrast, a sewn carcass edge 990 is limited by the mechanical limitations of sewing. For example, as shown in FIG. 9, the sewn carcass edge 990 is a right angle. Unique patterns are not possible with sewing because of the size of the thread and minimum required distances between adjacent stitches. The unique shapes and patterns provided through welding processes described herein can enable anchoring patterns to be generated without the use of additional materials and/or compromising the integrity of the de-icer assembly. Sewn carcass edge 990 is limited by the joining method of sewing and does not provide a natural fluid barrier as the welded edge 988 would. As will be appreciated by those of skill in the art, an additional manufacturing used to provide a fluid barrier may therefore be eliminated by the use of welded edge 988.

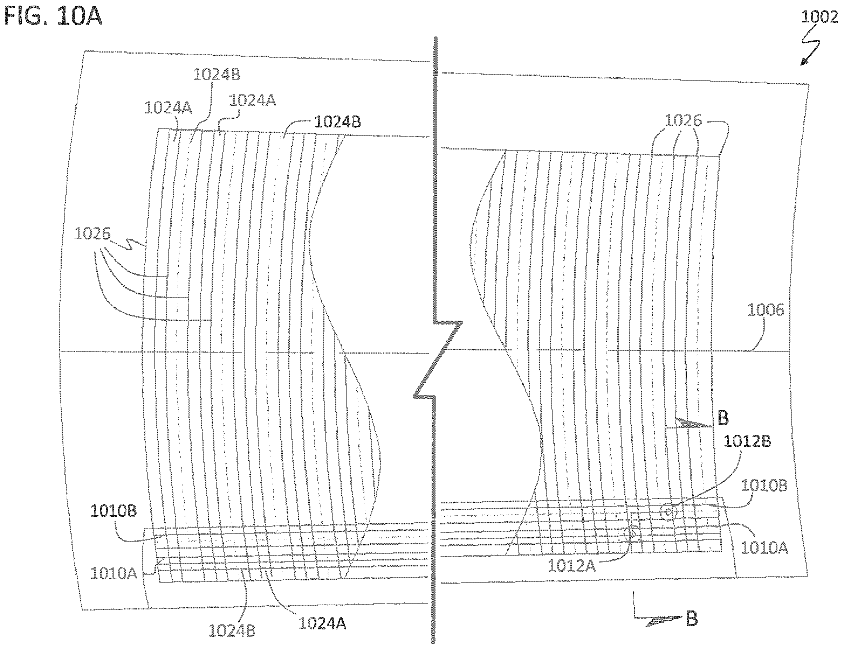

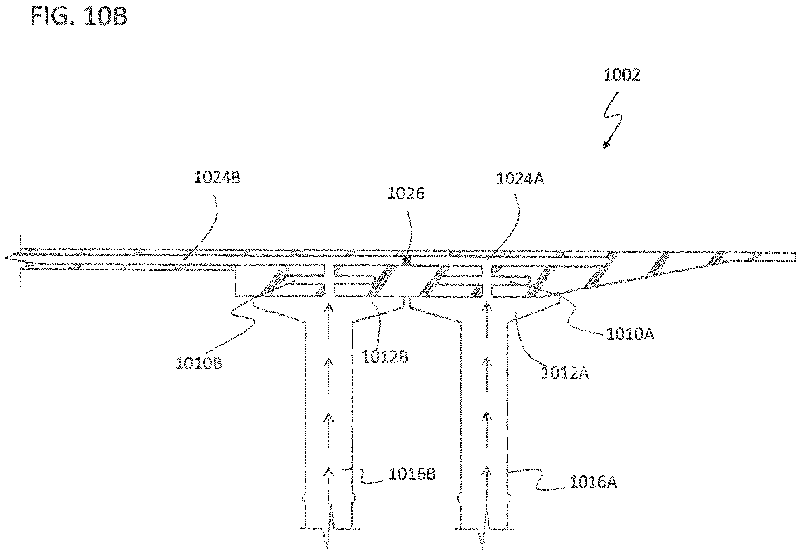

Turning now to FIGS. 10A-10B, a de-icer assembly 1002 in accordance with an embodiment of the present disclosure is shown. The de-icer assembly 1002 includes alternating inflatable portions 1024A, 1024B that are separated by welded portions 1026. The de-icer assembly 1002 can be applied over an airfoil about a leading edge axis 1006. FIG. 10A shows a plan view schematic illustration of the de-icer assembly 1002 and FIG. 10B shows a cross-sectional view of the de-icer assembly along the line B-B shown in FIG. 10A.

As shown, using the welded processes described herein, two sets of inflatable portions 1024A, 1024B (or more sets) can be configured such that a first set of inflatable portions 1024A is operated independently from a second set of inflatable portions 1024B. As shown, the first set of inflatable portions 1024A is supplied with fluid from a first manifold 1010A and the second set of inflatable portions 1024B are is supplied with fluid form a second manifold 1010B. Accordingly, as shown in FIGS. 10A-10B, the first manifold 1010A is supplied through a first connector 1012A from a first flow path 1016A and is configured to supply fluid into the first set of inflatable portions 1024A. Similarly, the second manifold 1010B is supplied through a second connector 1012B from a second flow path 1016B and is configured to supply fluid into the second set of inflatable portions 1024B. As will be appreciated by those of skill in the art, there are a variety of construction methods and tube orientations that may be used to achieve similar fluid distribution.

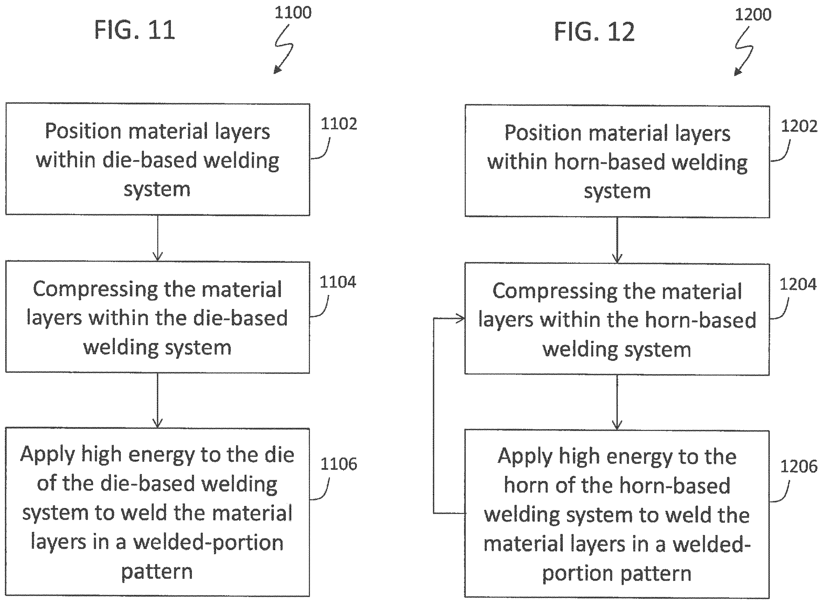

Turning to FIG. 11, a flow process for manufacturing a de-icer assembly in accordance with an embodiment of the present disclosure is shown. The flow process 1100 is a die-based welding process and can include one or more of the above described features related to die-based welding, including, but not limited to, a die and/or die base having a welded-portion pattern thereon.

At block 1102, material layers are positioned within a die-based welding system, such as shown in FIG. 3. The material layers are positioned between a die and a die base such that a welded-portion pattern can be welded into the material layers. The materials, die, and die base may be warmed or otherwise prepared at this stage. At block 1104, the die and/or the die base are compressed such that the material layers are pressed together. At block 1106, high energy (such as radio frequency energy) is applied to the die-based welding system such that the material layers are welded or bonded together in the welded-portion pattern. Thus, a de-icer having a welded-portion pattern (and associated inflatable portion pattern) in accordance with the above described embodiments is formed.

Turning to FIG. 12, a flow process for manufacturing a de-icer assembly in accordance with another embodiment of the present disclosure is shown. The flow process 1200 is a horn-based welding process and can include one or more of the above described features related to horn-based welding, including, but not limited to, a computer controlled horn moveable in a welded-portion pattern.

At block 1202, material layers are positioned within a horn-based welding system, such as shown in FIG. 4. The material layers are positioned between a horn and an anvil such that a welded-portion pattern can be welded into the material layers by application of the horn. At block 1204, the material layers are pressed together between the horn and the anvil. At block 1206, high energy (such as ultrasonic, high-frequency acoustic vibrations) is applied to the horn-based welding system such that the material layers are welded or bonded together in the welded-portion pattern. Thus, a de-icer having a welded-portion pattern (and associated inflatable portion pattern) in accordance with the above described embodiments is formed. As will be provided by those of skill in the art, the degree of compression may vary depending on the desired local features of the material weld as block 1204 and/or 1206 may be continuously applied in moving horn iterations, e.g., in a looping/continuous process. For example, a traversing horn may be employed to achieve a continuous process.

In view of the above, and as will be appreciated by those of skill in the art, when manufacturing a de-icer assembly in accordance with embodiments of the present disclosure, different welded portion geometries and/or inflatable portion geometries can be combined to form a unique de-icer assembly. The manufacturing process in some embodiments involves designing and making or supplying a die having a predefined geometry that is configured to enable welding of a de-icer assembly in only specific areas such that welded portions and inflatable portions are formed between two welded-material layers. In some such embodiments, the welded-material layers may have elastomeric exterior layers or coatings thereon, although alternative and/or additional exterior layers of polymers, composites, and/or non-woven textiles can be employed without departing from the scope of the present disclosure. Further, in some embodiments, a coating layer can be applied after the welded-material layers are welded together. The die may be subjected to high energy, such as radio frequencies, while the welded-material layers are compressed by the die.

In other embodiments, the manufacturing process can be based on horn-based welding. For example, a high-energy, ultrasonic horn can be used to pass over sections of welded-material layers in a pattern to form a de-icer assembly as shown and described herein.

Advantageously, embodiments described herein provide improved fabric strength at connection points where welding is applied rather than adhesives and/or sewing. Further, embodiments provided herein enable the ability to selectively enable or prevent cross inflatable portion inflation. Moreover, embodiments provided herein can provide lower fabrication costs, reduced material costs, and reduced labor time. Further, less excess or scrap material may be generated by the manufacture of de-icer assemblies as provided herein due to an ideal pattern being pre-defined (either by die geometry or computer aided horn welding). Moreover, repair of de-icer assemblies as described herein may be improved through supplemental welding or other processes.

Furthermore, due to the unique geometries and the bonding enabled through the welding processes described herein, the de-icer assemblies can have improved durability and there is an ability to address known stress concentrations in areas too fine for current methods to control. Moreover, undesirable cross-bleed between adjacent inflatable portions can be avoided due to the welding/bonding process provided herein. Further, intentional bleed between inflatable portions can be designed and implemented where desired.

Additionally, because of the welding processes described herein, in addition to having the ability to unique inflatable portions, the welded portions are also controllable. For example, embodiments provided herein enable an ability to vary two-dimensional footprints of bonded surfaces to add strength as required (e.g., varying the width of a welded portion, as shown in FIG. 6). Furthermore, three-dimensional support and/or structure can be implemented wherein additional bonding/welding material can be supplied to form a stronger or thicker section of the de-icer assembly, as desired. In additional to increased thickness for structural purposes, welding as provided herein can enable three-dimensional surfaces to the de-icer assemblies, e.g., textured surfaces at the welded portions.

Moreover, advantageously, trimming processes can be integrated into or assisted by the welding process press, allowing for more complex geometry to mitigate stress concentrations currently presented by linear edges and/or sharp corners of carcass (e.g., as shown in FIGS. 7-9). Further, the edge of carcass can be welded shut (FIG. 9), preventing separation between the exterior of a "seam" and a cured rubber at the carcass edge during inflation, thus extending part life. Furthermore, guide welds could assist with the trimming of the part along edges with tight tolerances.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

For example, as noted above, various types of welding may be used without departing from the scope of the present disclosure. For example, any type of welding that forms a solid-state weld between layers may be used without departing from the scope of the present disclosure, including but not limited to, die-based and horn-based welding techniques.

Accordingly, the present disclosure is not to be seen as limited by the foregoing description, but is only limited by the scope of the appended claims.

## Claims

1. A method of manufacturing a de-icer assembly, the method comprising:
positioning a first welded-material layer and a second welded-material layer between a die and a die base of a die-based welding system, wherein at least one of the die and the die base includes a welded-portion pattern thereon configured to weld the first welded-material layer to the second welded-material layer in the pattern of the welded-portion pattern such that inflatable portions are formed within the welded-portion pattern formed in the de-icer assembly between non-welded sections of the first welded-material layer and the second welded-material layer;
pressing the first welded-material layer and the second welded-material layer together between the die and the die base; and
applying high energy to the die-based welding system using a high energy source such that the first welded-material layer and the second welded-material layer are welded together at the areas in the shape of the welded-portion pattern to form a welded de-icer assembly.

2. The method of claim 1, wherein the high energy source is radio frequency energy.

3. The method of any preceding claim, wherein the die-based welding system includes an upper platen supporting the die and a lower platen supporting the die base, the upper and lower platens configured to press the die and die base together.

4. The method of any preceding claim, wherein the die-based welding system includes a press supporting the die and a press base supporting the die base, wherein the press and the press base are configured to compress the first welded-material layer and the second welded-material layer between the die and the die base.

5. The method of any preceding claim, further comprising positioning a buffer layer between the die base and the second welded-material layer.

6. The method of any preceding claim, wherein the welded-portion pattern defines a pattern of welded portions and inflatable portions that are formed in the de-icer assembly extending in a chordwise direction, or wherein the welded-portion pattern defines a pattern of welded portions and inflatable portions that are formed in the de-icer assembly extending in a spanwise direction, or wherein the welded-portion pattern defines a pattern of welded portions and inflatable portions that are formed in the de-icer assembly extending in an alternating chordwise direction pattern, wherein a first set of inflatable portions is fluidly isolated from a second set of inflatable portions, or wherein the welded-portion pattern defines a pattern of welded portions and inflatable portions that are formed in the de-icer assembly extending in an alternating spanwise direction pattern, wherein a first set of inflatable portions is fluidly isolated from a second set of inflatable portions, or wherein the welded-portion pattern defines a pattern of welded portions and inflatable portions that are formed in the de-icer assembly in a non-uniform pattern.

7. The method of any preceding claim, wherein the welded-portion pattern defines a pattern of welded portions and inflatable portions including reinforced corners.

8. The method of any preceding claim, wherein the welded-portion pattern defines a pattern of welded portions and inflatable portions including welded portions having non-uniform dimensions.

9. The method of any preceding claim, wherein the welded-portion pattern includes a geometric edge pattern.

10. The method of any preceding claim, wherein the welded-portion pattern defines a pattern of welded portions and inflatable portions including welded portions having bleed apertures formed within the welded portions such that adjacent inflatable portions are fluidly connected.

11. The method of any preceding claim, wherein the first welded-material layer includes a first exterior layer that is opposite a side of the first welded-material layer that welds to the second welded-material layer, preferably wherein the first exterior layer is an elastomeric layer.

12. The method of any preceding claim, wherein the second welded-material layer includes at least one second exterior layer that is opposite a side of the second welded-material layer that welds to the first welded-material layer, preferably wherein the at least one second exterior layer is an elastomeric layer.

13. The method of any preceding claim, wherein at least one of the first welded-material layer and the second welded-material layer includes a filler material selected to bond the first welded-material layer to the second welded-material layer when the high energy is applied by the high energy source.

14. The method of any preceding claim, wherein the welded-material layers are formed from at least one of neoprene, natural rubber, polychloroprene, thermoplastics, thermosetting elastomers, polyurethane, thermoplastic polyurethane, or silver urethane.
